# EUROPÄISCHE PATENTSCHRIFT

(11) **EP 2 810 904 B1**
(45) Veröffentlichungstag und Bekanntmachung des Hinweises auf die Patenterteilung: **09.03.2016**
(21) Anmeldenummer: 14170799.2
(22) Anmeldetag: 02.06.2014
(51) Int. Cl.: B65H 29/16, B42C 19/02

(54) **Zuführen loser Bogenstapel in einen Transportkanal**
Feeding of loose stacks of sheets into a transport channel
Transport de pile de feuilles en vrac dans un canal de transport

(30) Priorität: 05.06.2013 CH 10752013
(43) Veröffentlichungstag der Anmeldung: 10.12.2014
(73) Patentinhaber: Müller Martini Holding AG, 6052 Hergiswil (CH)
(72) Erfinder: Mösli, Urs, 8405 Winterthur (CH); Hörler, Beat, 8471 Bänk-Dägerlen (ZH) (CH)

(56) Entgegenhaltungen:
- DE-A1- 2 231 225
- US-A1- 2003 021 668

## Beschreibung

Die vorliegende Erfindung betrifft eine Vorrichtung und ein Verfahren zur taktweisen Zuführung eines aus mindestens einem Druckbogen gebildeten liegend transportierten Buchblocks zu einer Verarbeitungsstation, wobei die Vorrichtung eine erste und eine zweite Transporteinrichtung aufweist, wobei die zweite Transporteinrichtung einen Transportkanal mit einer Auflagefläche, einer Aussparung und einen in einem Spalt des Transportkanals angeordneten Transportfinger besitzt und wobei die erste Transporteinrichtung in die Aussparung des Transportkanals eingreift.

Aus der EP2292444 A2 Fig. 9 ist eine Transportvorrichtung mit einem Transportkanal bekannt, mit welcher Buchblocks zu einer Weiterverarbeitungsstation gefördert werden. Ein als Schaufelrad ausgebildetes Zuführelement, nimmt die zugeführten Buchblocks in Zwischenräume zwischen auf einer Scheibe angeordneten Rechen einzeln auf und fördert sie durch die Drehung des Schaufelrads zunächst in der gleichen rotativen Ebene weiter. Nach einem vorbestimmten Drehwinkel wird der Buchblock von dem Zuführelement in einer Ausnehmung des Transportkanals in diesen ausgestossen, überführt und weitergeleitet. Der o.a. Aufbau des Zuführelements ist demnach so gestaltet, dass die Buchblocks im Transportkanal, in welchem sie weitergefördert werden sollen, von senkrecht bis waagerecht in einem beliebigen Winkel zum Transportkanal vorliegen können. Durch den Aufbau der o.a. Transportvorrichtung kann das Zuführelement lediglich in eine einzige Richtung gedreht werden, wobei die Buchblocks in den relativ grossen, radial ausgebildeten Zwischenräumen zwischen den Rechen während der Drehbewegung auseinanderfallen und auffächern können. Hier besteht die Gefahr, dass die Buchblocks beim Auffächern beschädigt werden können. Die Transportgeschwindigkeit der Buchblocks kann dadurch erheblich eingeschränkt werden. Durch den Aufbau des schaufelradähnlichen Zuführelements mit einer einseitig begrenzenden Scheibe, lassen sich darüber hinaus nicht mehrere Übergabevorrichtungen am selben Transportkanal betreiben.

In einem weiteren in Fig. 1 dargestellten Ausführungsbeispiel dieser Druckschrift werden Buchblocks zunächst mit als Rechen ausgebildeten Zuführelementen einer Zuführvorrichtung in den Transportkanal gefördert. Dort werden sie von Transportfingern der Transportvorrichtung übernommen und entlang des Transportkanals weggefördert. Da die Zuführelemente beim Ablegen der Buchblocks eine Geschwindigkeitskomponente entgegen der Förderrichtung des Transportkanals aufweisen und die Übernahme der Buchblocks durch die Transportfinger zum Ablegezeitpunkt erfolgt, erhöht sich die Geschwindigkeitsdifferenz zwischen Buchblock und Transportfinger. Besonders bei höheren Verarbeitungsgeschwindigkeiten steigt dadurch die Gefahr, dass die Buchblocks auseinanderfallen oder dass sich die einzelnen Druckbogen gegeneinander in nachteiliger Weise verschieben. Bei der Übergabe eines Buchblocks an die Transportvorrichtung ist die jeweilige Zuführvorrichtung oberhalb des Transportkanals angeordnet, wodurch der Buchblock beim Abschieben durch den Transportfinger eine Höhendifferenz zum Transportkanal überwinden muss, was die Gefahr des Auseinanderfallens bzw. des Verschiebens erhöht. Zudem erweist sich diese Zuführvorrichtung als relativ komplex, wartungsintensiv und teuer.

US 2003/021668 A1 offenbart (siehe insbesondere Fig. 25, §83-92) eine Vorrichtung zur taktweisen Zuführung eines Buchblocks zu einer Verarbeitungsstation (§1, "zur" bedeutet nur "geeignet für"), wobei die Vorrichtung eine erste (68+70) und eine zweite (82) Transporteinrichtung aufweist, wobei die zweite Transporteinrichtung (82) einen Transportkanal mit einer Auflagefläche und einen in einem Spalt (94) des Transportkanals angeordneten Transportfinger (90) besitzt.

US 2003/021668 A1 offenbart nicht, dass der Transportkanal der zweiten Transporteinrichtung eine Aussparung aufweist, in die die erste Transporteinrichtung (68+70) eingreift. US 2003/021668 A1 offenbart auch nicht, dass die erste Transporteinrichtung eine kammförmig ausgebildete Einführklappe aufweist, die in die Aussparung eingreift. US 2003/021668 A1 offenbart gar keine Einführklappe.

DE 22 31 225 A1 offenbart eine Vorrichtung zur taktweisen Zuführung eines Buchblocks zu einer Verarbeitungsstation (S. 1 §1), wobei die Vorrichtung eine erste (1) und eine zweite (4+5) Transporteinrichtung aufweist, wobei die zweite Transporteinrichtung (4+5) einen Transportkanal mit einer Auflagefläche. DE 22 31 225 A1 offenbart, dass die erste Transporteinrichtung (1) eine kammförmig ausgebildete Einführklappe (6+7) aufweist, mit mehreren an einem Basisteil (7) angeordneten Zinken (6) und zwischen den Zinken ausgebildete, vom Transportkanal abgewendete Ausnehmungen sowie mehrere auf der dem Transportkanal abgewendeten Seite der Einführklappe angeordnete und in die Ausnehmungen eingreifende Transportmittel (1, siehe S. 3 letzten 3 Zeilen; für die zweite Transporteinrichtung ist es ähnlich: Transportmittel 4, 5, siehe S. 4 Absatz 6 Z. 1-2).

DE 22 31 225 A1 offenbart nicht, dass die zweite Transporteinrichtung einen in einem Spalt des Transportkanals angeordneten Transportfinger besitzt und eine Aussparung aufweist, in die die erste Transporteinrichtung eingreift.

Aufgabe der Erfindung ist es, eine einfache, platzsparende und kostengünstige Zuführvorrichtung und ein Verfahren zur Verfügung zu stellen, mit dem Buchblocks auch bei hohen Taktzahlen produktschonend dem Transportkanal einer Transportvorrichtung zugeführt werden können, ohne dass die Buchblocks bei der Zuführung oder der Übernahme durch die Transportfinger des Transportkanals auseinanderfallen oder sich die einzelnen Druckbogen der Buchblocks zueinander in unzulässiger Weise verschieben.

Die Aufgabe wird durch eine Vorrichtung mit den Merkmalen des kennzeichnenden Teils des Anspruchs 1 gelöst. Dabei werden Buchblocks mit einer erfindungsgemässen ersten Transportvorrichtung in einen Transportkanal einer zweiten Transportvorrichtung überführt. Die erste Transportvorrichtung weist eine Einführklappe sowie mehrere auf der den Transportkanal abgewendeten Seite der Einführklappe angeordneten Transportmittel auf. Beim Verlassen der ersten Transportvorrichtung werden die Buchblocks mit der Einführklappe von der ersten Transportvorrichtung abgehoben und anschliessend von den Transportfingern der zweiten Transportvorrichtung übernommen und weggefördert.

Vorzugsweise weist die Einführklappe der Zuführvorrichtung eine erste Position zur Übernahme des Buchblocks von den Transportmitteln der ersten Transportvorrichtung und eine zweite Position zur Übergabe des Buchblocks in den Transportkanal der zweiten Transporteinrichtung auf und ist aus der ersten Position in die zweite Position sowie zurück schwenkbar angeordnet. Eine solche Anordnung der Einführklappe, bei der die beiden Positionen in einem möglichst kleinen Winkel voneinander beabstandet sein können, erleichtert einen schnellen Wechsel zwischen den zwei Positionen, wobei ein schneller Weitertransport der Buchblocks ohne Zeitverlust ermöglicht wird.

In einer bevorzugten Ausführungsform liegt die Schwenkachse der Einführklappe innerhalb der Einführklappe, wobei die Einführklappe zur Übernahme des Buchblocks von der ersten Transporteinrichtung in die erste Position schwenkbar ist, und wobei die Zinken der Einführklappe in dieser ersten Position teilweise unterhalb eines stromabwärtigen Endes der Transportmittel liegen. Dadurch dass die Einführklappe in dieser Position mit einem Teil ihres Endbereichs die darüber hinweggeförderten Buchblocks berührt und dadurch frühzeitig abbremst, kann ein noch schnellerer Transport der Buchblocks auf der ersten Transporteinrichtung erfolgen.

Weiterhin kann der steuerbare Antrieb der Einführklappe als Schrittmotor oder als Linearmotor oder als Servomotor und/oder als pneumatische Vorrichtung ausgebildet sein. Durch die Auswahlmöglichkeit aus den verschiedenen Antriebsarten kann das Antriebssystem gewählt werden das den jeweiligen Anforderungen genügt und am kostengünstigsten hergestellt werden kann.

Weiterhin kann der Antrieb auch in Abhängigkeit von einer Teilung und/oder einer Geschwindigkeit der Transportfinger steuerbar ausgebildet sein. Dadurch kann erreicht werden, dass die Buchblocks von den im Transportkanal angeordneten Transportfingern zum optimalen Zeitpunkt übernommen werden und dadurch die Bogenausrichtung im Buchblock auch bei hohen Geschwindigkeiten nicht verändert oder verschlechtert wird.

In einer Weiterbildung der Zuführvorrichtung kann der Antrieb in Abhängigkeit von einer Höhe und/oder Breite und/oder Masse des Buchblocks und/oder der Reibung zwischen den einzelnen Bogen des Buchblocks steuerbar sein. Die Anpassung an diese Paramater ermöglichen beispielsweise eine höhere Flexibilität der Vorrichtung, weil dadurch zusätzlich die Zuführung von Buchblocks unterschiedlicher Formate und Beschaffenheit ermöglicht wird.

In einer Weiterbildung der Zuführvorrichtung kann die Einführklappe und/oder die Auflagefläche des Transportkanals mit Blasluft beaufschlagte Luftaustrittsöffnungen aufweisen. Dadurch bilden sich Luftpolster unter den transportierten Buchblocks, wobei sich die Reibung der Buchblocks bei der Zuführung vermindert und höhere Zuführgeschwindigkeiten erreichbar sind.

Die erfindungsgemässe Aufgabe wird auch durch ein Verfahren mit den Merkmalen des kennzeichnenden Teils des Anspruchs 9 gelöst.

Es hat sich als vorteilhaft erwiesen, dass die Einführklappe zur Übernahme des Buchblocks von der ersten Transporteinrichtung in die erste Position geschwenkt wird, wobei die Zinken der Einführklappe in dieser Position teilweise unterhalb des stromabwärtigen Endes der Transportmittel liegen. Dadurch kann die Einführklappe dazu benutzt werden die Buchblocks frühzeitig durch eine Berührung mit der Einführklappe abzubremsen. Erst im gewünschten Augenblick beginnt dann die Übernahme des Buchblocks, wobei die Einführklappe aus der weiteren Position in die erste Position verlagert wird.

Es hat sich ebenfalls als vorteilhaft erwiesen, wenn die Einführklappe mit einem steuerbaren Antrieb pneumatisch, servo-pneumatisch, über einen Servomotor, einen Schrittmotor oder einen Linearmotor geschwenkt wird. Durch die verschiedenen Antriebsarten kann das Antriebssystem gewählt werden das den jeweiligen Anforderungen genügt und am kostengünstigsten hergestellt werden kann.

Wenn der Antrieb der Einführklappe in Abhängigkeit von einer Transportfingerteilung und/oder einer Transportfingergeschwindigkeit angesteuert wird, kann der Übernahmezeitpunkt des Buchblocks durch den im Transportkanal angeordneten Transportfingern optimal erfolgen.

Eine weitere vorteilhafte Fortbildung des Verfahrens ergibt sich, wenn der Antrieb in Abhängigkeit von einer Höhe und/oder Breite und/oder Masse des Buchblocks und/oder der Reibung zwischen den einzelnen Bogen des Buchblocks angesteuert wird. Die Anpassung an diese Paramater ermöglicht dann eine höhere Flexibilität der Verfahrensabläufe, weil dadurch zusätzlich die Zuführung von Buchblocks unterschiedlicher Formate und Beschaffenheit erleichtert wird.

Wenn ein auf der Einführklappe und/oder einer Auflagefläche des Transportkanals befindlicher Buchblock über Luftaustrittsöffnungen der Einführklappe und/oder der Auflagefläche mit Druckluft beaufschlagt wird, bilden sich ein Luftpolster unter dem Buchblock, wobei sich die Reibung des Buchblocks bei der Zuführung vermindert und eine höhere Zuführgeschwindigkeit ermöglicht.

Nachstehend wird die Erfindung unter Bezugnahme auf die Figuren, auf die hinsichtlich aller erfindungswesentlichen und in der Beschreibung nicht näher herausgestellten Einzelheiten ausdrücklich Bezug genommen wird, erläutert. Alle für das unmittelbare Verständnis der Erfindung nicht wesentlichen Elemente sind weggelassen worden. Gleiche Elemente sind in den einzelnen Figuren mit den gleichen Bezugszeichen versehen. In der Zeichnung zeigt:
Fig. 1 eine Vorrichtung zum Zuführen von Buchblocks aus einer ersten Transportvorrichtung und in eine zweite Transportvorrichtung,
Fig. 2 eine Draufsicht der Einführklappe aus Fig. 1 und
Fig. 3a, 3b bis 6a, 6b eine Buchblockzuführvorrichtung in verschiedenen Phasen der Zuführung eines Buchblocks aus der ersten Transportvorrichtung in die zweite Transportvorrichtung.

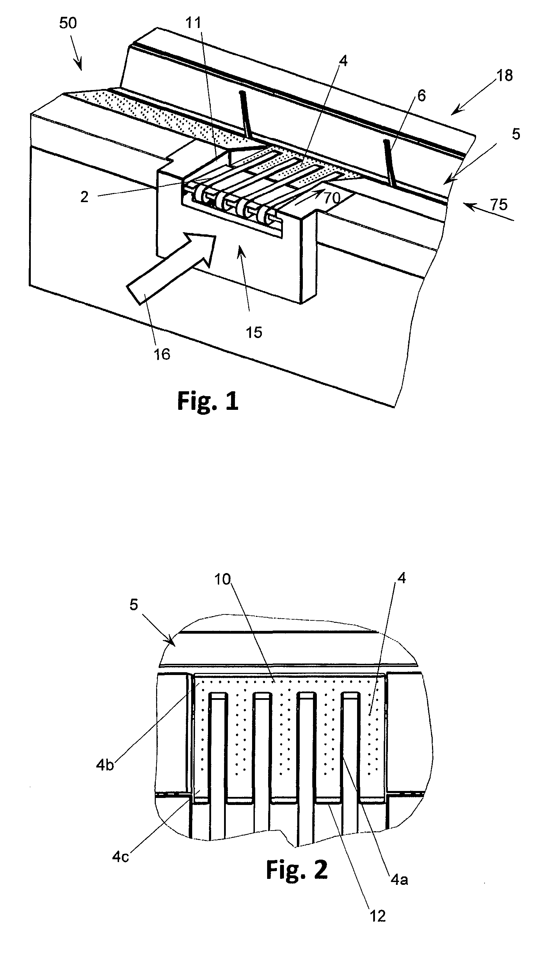

In Fig. 1 ist eine perspektivische Darstellung einer Vorrichtung 50 zum Zuführen von Buchblocks 1 mit einer vorgeschalteten Eintaktvorrichtung 16, einer ersten Transportvorrichtung 15 und einer zweiten Transportvorrichtung 18. Dabei weist die erste Transportvorrichtung 15 eine Einführklappe 4 und als Transportriemen ausgebildete Transportmittel 2 auf. Die zweite Transportvorrichtung 18 weist ihrerseits einen Transportkanal 5 und Transportfinger 6 auf.

In Fig. 2 ist eine vereinfachte Darstellung einer kammförmigen Einführklappe 4 mit mehreren Ausnehmungen 4a, eine dem Transportkanal 5 aus Fig. 1 zuggewendete, als Basisteil 10 ausgebildete Seite 4b sowie eine dem Transportkanal 5 abgewendete, als Zinken 12 ausgebildet Seite 4c.

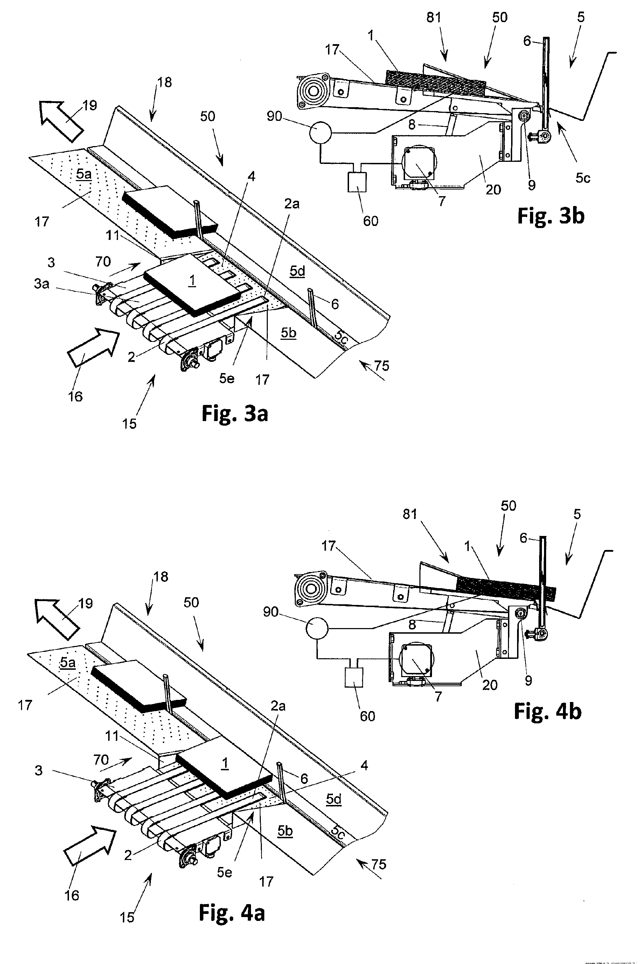

In den Fig. 3 bis 6 sind verschiedene Phasen der Buchblockzuführung aus der ersten Transportvorrichtung 15 in die zweite Transportvorrichtung 18 dargestellt, jeweils in einer perspektivischen Ansicht 3a, 4a, 5a, 6a und einer Schnitt-Ansicht 3b, 4b, 5b, 6b. Die in den Fig. 3a, 4a, 5a, 6a dargestellte erste Transportvorrichtung 15 umfasst im Wesentlichen die Transportmittel 2 mit einem stromabwärtigen Ende 2a, einen Transporttisch 3 und eine Einführklappe 4. Die Transportmittel 2 sind im vorliegenden Ausführungsbeispiel als Transportriemen ausgebildet, die in die Ausnehmungen 4a der Einführklappe 4, welche auf der dem Transportkanal 5 abgewendeten Seite der Einführklappe 4 angeordnet sind, eingreifen. Die in eine Aussparung 5e des Transportkanals 5 eingreifend angeordnete Einführklappe 4 weist mehrere, an einem Basisteil 10 angeordneten Zinken 12 auf. Zwischen diesen Zinken 12 sind vom Transportkanal 5 abgewendet Ausnehmungen 4a angeordnet. Auf der dem Transportkanal 5 zugewendeten Seite 4b der Einführklappe 4 ist eine Schwenkachse 9 der Einführklappe 4 zu deren Schwenken aus einer ersten Position 81 in eine zweite Position 82 und zurück angeordnet.

Die Zuführvorrichtung 50 ist in den Fig. 1 bis 6 mit ihrer ersten Transporteinrichtung 15 im rechten Winkel zur zweiten Transporteinrichtung 18 dargestellt. Durch einfache, einem Fachmann bekannte, bauliche Veränderungen, beispielsweise der Anordnung der Zinken 12 in einem beliebigen Winkel zum Basisteil 10, der Ausrichtung der Ausnehmungen 4a, der Aussparungen 5e usw. kann die Zuführvorrichtung 50 so ausgebildet sein, dass jeder beliebige Winkel zwischen der ersten Transporteinrichtung 15 und der zweiten Transporteinrichtung 18 realisierbar ist. Bei einer Zuführvorrichtung 50, bei welcher die Transporteinrichtung 15 in einem spitzen Winkel zum Transportkanal 5 angeordnet ist, wird der Buchblock 1 während der Zuführung bereits mit einer Geschwindigkeitskomponente in Richtung der Förderrichtung 75 des Transportkanals 5 beaufschlagt. Eine solche Ausführung ist aufwändiger zu realisieren, lässt aber höhere Transportgeschwindigkeiten zu.

Der Transporttisch 3 weist auf seiner dem Transportkanal 5 zugewandten Seite Aussparungen 3a auf, in denen die als Transportriemen ausgebildeten Transportmittel 2 angeordnet sind, wobei die Aussparungen 3a in Abhängigkeit vom Winkel zwischen der ersten Transporteinrichtung 15 und der zweiten Transporteinrichtung 18 entsprechend ausgebildet sind.

Ein unterhalb der Einführklappe 4 angeordneter Antrieb 7, der beispielsweise als Servomotor, Schrittmotor, Linearmotor oder als pneumatische/servopneumatische Vorrichtung ausgebildet sein kann, ist mit der Einführklappe 4 über ein Koppelgetriebe 8 antriebsverbunden. In den Fig. 3b, 4b, 5b, 6b ist eine Verbindung zwischen dem Antrieb 7 und einer Steuerung 60 als Steuerleitung schematisch dargestellt. Eine weitere Steuerleitung verbindet die Steuerung 60 mit einer Druckluftquelle 90. Die Einführklappe 4 und die obere Auflagefläche 5a weisen Luftaustrittsöffnungen 17 auf, die gepunktet dargestellt sind. Eine Verbindung zwischen Druckluftquelle 90 und mehreren Luftaustrittsöffnungen 17 ist ebenfalls nur schematisch dargestellt.

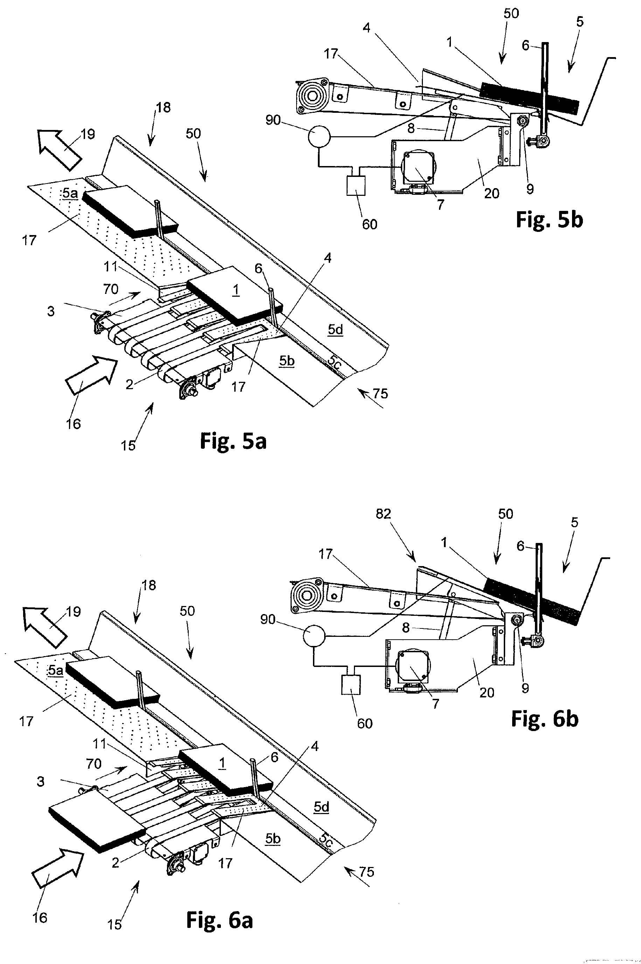

In den Fig. 3a, 4a, 5a, 6a ist die erste Transporteinrichtung 15 mit der unterschiedlich positionierten Einführklappe 4 dargestellt. In den Fig. 3b und 4b befindet sich die Einführklappe 4 in einer ersten Position 81, einer Übernahmeposition zur Übernahme des Buchblocks 1 von den Transportmitteln 2. In Fig. 6b befindet sich die Einführklappe 4 in einer zweiten Position 82, einer Übergabeposition zur Übergabe des Buchblocks 1 an den Transportkanal 5 der zweiten Transporteinrichtung 18. Die erste Position 81 kann dabei so angeordnet sein, dass die Einführklappe 4 entweder fluchtend mit den Transportmitteln 2 oder sogar leicht unterhalb der Transportmittel 2 angeordnet ist. Die Lagerung der Antriebs- und Umlenkräder der Transportriemen, der Transporttisch 3, die Lagerung der Schwenkachse 9 der Einführklappe 4 wie auch der Antrieb 7 sind an einem Gestell 20 angeordnet. Beim Transportkanal 5 sind mindestens die Auflageflächen 5a, 5b gegenüber der Horizontalen geneigt oder konkav geformt.

Wie in Fig. 1 veranschaulicht, werden die Buchblocks 1 der Vorrichtung 50 mittels der Eintaktvorrichtung 16 in einer Förderrichtung 70 der ersten Transportvorrichtung 15 mit konstanter Geschwindigkeit zugeführt, wobei die Buchblocks 1 in Abhängigkeit von Geschwindigkeit und Teilung der Transportfinger 6 der zweiten Transporteinrichtung 18 eingetaktet werden. Die Eintaktung erfolgt in bekannter Weise, wie zum Beispiel in der DE3621601 beschrieben, wobei regellos beabstandete Gegenstände im richtigen räumlichen und zeitlichen Abstand einer Fördervorrichtung zugeführt werden.

Die seitliche Ausrichtung der Buchblocks 1 auf den Fixkantenanschlag 11 der Buchblockzuführvorrichtung 50 erfolgt mittels hier nicht dargestellter, dem Fachmann aber bekannter Seitenleitbleche oder ähnlicher Einrichtungen.

Mit dem Antrieb 7 wird die Einführklappe 4 über das Koppelgetriebe 8 zwischen der ersten Position 81, in der sie mit den Transportmitteln 2 fluchtet und der zweiten Position 82 verfahren, in der sie in fluchtend mit den Auflageflächen 5a, 5b des Transportkanals 5 oder etwa 5° steiler steht als die Auflageflächen 5a, 5b. Die Luftaustrittsöffnungen 17 der Einführklappe 4 und der oberen Auflagefläche 5a, können mit Blasluft beaufschlagt werden, um die Reibung zwischen Buchblock 1 und diesen Flächen zu reduzieren.

Weil beim Transportkanal 5 mindestens die Auflageflächen 5a und 5b gegenüber der Horizontalen geneigt oder konkav geformt sind, liegt der Buchblock 1 mit seiner vorauseilenden Kante an einer Leitfläche 5d des Transportkanals 5 sicher an.

Fig. 3a und 3b zeigen den Buchblock 1, der von den Transportmitteln 2 in Richtung Transportkanal 5 transportiert wird, wobei der Buchblock 1 sich bereits im Bereich der Einführklappe 4 befindet. In den Fig. 3a, 3b und 4a, 4b befindet sich die Einführklappe 4 in der ersten Position 81, wobei die Übernahme des Buchblocks 1 durch die Einführklappe 4 erfolgt. Der Buchblock 1, der von den Transportmitteln 2 in Richtung Transportkanal 5 transportiert wird, ragt entsprechend Fig. 4a, 4b mit seiner vorauseilenden Kante bereits über den Spalt 5c für die Transportfinger 6 hinaus. Die Schwenkachse 9 ist innerhalb der Einführklappe 4 angeordnet. Mit der Schwenkachse 9 wird die Einführklappe 4 zur Übernahme des Buchblocks 1 von den Transportmitteln 2 in eine erste Position 81 geschwenkt, wobei die Zinken 12 der Einführklappe 4 in dieser ersten Position 81 teilweise unterhalb des stromabwärtigen Endes 2a der Transportmittel 2 liegen. Die von den Transportmitteln 2 zugeführte Buchblock 1 wird an die Einführklappe 4 übergeben und auf dieser frühzeitig abgebremst.

Fig. 5a und 5b zeigen den Buchblock 1 mit seiner vorauseilenden Kante kurz vor der in etwa rechtwinklig zu den Auflageflächen 5a, 5b, 5c stehenden Leitfläche 5d des Transportkanals 5. Die Einführklappe 4 beginnt sich in Richtung der zweiten Position 82 zu bewegen, wodurch der Buchblock 1 den Kontakt zu den Transportmitteln 2 verliert und von ihnen keinen weiteren Vortrieb erfährt.

Fig. 6a und 6b zeigen den Buchblock 1 komplett in den Transportkanal 5 eingefördert. Seine vorauseilende Kante liegt an der Leitfläche 5d an, die Einführklappe 4 befindet sich in ihrer zweiten Position 82 und der Transportfinger 6 schiebt den Buchblock 1 von der Einführklappe 4 in Förderrichtung 75 des Transportkanals 5. Die Übergabe der Buchblocks 1 an den Transportkanal 5 kann abhängig von deren Format, d.h. der Buchblockhöhe und -breite beeinflusst werden. Gemeinsam mit der Teilung und/oder der Geschwindigkeit der Transportfinger 6 kann auch der Abstand und die Geschwindigkeit, mit der die Buchblocks 1 der Einführklappe 4 zugeführt werden, über die Steuerung 60 angepasst werden.

Buchblocks1 mit grosser Buchblockhöhe erfordern eine längere Verweildauer der Einführklappe 4 in der zweiten Position 82, wobei die Zuführteilung beeinflusst wird. Buchblocks 1 mit kleiner Buchblockhöhe und grosser Buchblockbreite neigen bei der Übernahme durch den Transportfinger 6 eher zum Verdrehen oder Verschieben. Dadurch ergibt sich eine maximal zulässige Geschwindigkeit der Transportfinger 6.

Um auch solche Buchblocks 1 bei einer höheren Geschwindigkeit der Transportfinger 6 zuführen zu können, besteht die Möglichkeit, die Einführlappe 4 zum Zeitpunkt der Übergabe in eine wesentlich steilere Neigung zu schwenken als dies obenstehend beschrieben ist. Nachdem der Transportfinger 6 den Buchblock 1 übernommen hat, kann die Einführklappe 4 zum schonenden Weitertransport des Buchblocks 1 in etwa auf die Neigung der Auflageflächen 5a, 5b des Transportkanals 5 zurückgeschwenkt werden.

Die Buchblockbreite, die Zuführgeschwindigkeit und/oder die die Masse des Buchblocks 1 und die Grösse seiner Auflagefläche beeinflussen den Zeitpunkt, zu welchem die Einführklappe 4 den Buchblock 1 von den Transportmitteln 2 abzuheben hat. Um ein Verrutschen der Druckbogen innerhalb des Buchblocks 1 während des Transports zu vermeiden, kann von oben Luft senkrecht auf den Buchblock 1 geblasen werden, damit die Reibung zwischen den einzelnen Druckbogen erhöht wird. Sämtliche (verfahrensrelevante) Parameter werden der Steuerung 60 zur Verfügung gestellt, so dass diese für jeden Buchblock 1 die optimale Ansteuerung der Einführklappe 4, die optimale Luftmenge aus der Druckluftquelle 90 wie auch die maximal zulässige Taktzahl vorgeben kann.

Der Ausrichtzustand der Bogen im Buchblock 1 kann in der ersten Transporteinrichtung 15 sowie im Transportkanal 5 nach der Einführklappe 4 beispielsweise mittels Kameras erfasst werden. Die Steuerung 60 kann die von den Kameras übertragenen Daten auswerten und daraus ermitteln, wann die für den jeweiligen Buchblock 1 maximal zulässige Taktzahl erreicht ist.

## Patentansprüche

1. Vorrichtung (50) zur taktweisen Zuführung eines aus mindestens einem Druckbogen gebildeten liegend transportierten Buchblocks (1) zu einer Verarbeitungsstation (19), wobei die Vorrichtung (50) eine erste und eine zweite Transporteinrichtung (15, 18) aufweist, wobei die zweite Transporteinrichtung (18) einen Transportkanal (5) mit einer Auflagefläche (5a), einer Aussparung (5e) und einen in einem Spalt (5c) des Transportkanals (5) angeordneten Transportfinger (6) besitzt und wobei die erste Transporteinrichtung (15) in die Aussparung (5e) des Transportkanals (5) eingreift, wobei
• die erste Transporteinrichtung (15) eine kammförmig ausgebildete Einführklappe (4) mit mehreren an einem Basisteil (10) angeordneten Zinken (12) und zwischen den Zinken (12) ausgebildete, vom Transportkanal (5) abgewendete Ausnehmungen (4a) sowie mehrere auf der dem Transportkanal (5) abgewendeten Seite der Einführklappe (4) angeordnete und in die Ausnehmungen (4a) eingreifende Transportmittel (2) aufweist,
• die Einführklappe (4) in die Aussparung (5e) des Transportkanals (5) eingreifend ausgebildet ist und eine auf ihrer dem Transportkanal (5) zugewendeten Seite (4b) angeordnete Schwenkachse (9) besitzt sowie mit einem steuerbaren Antrieb (7) verbunden ist.

2. Vorrichtung (50) nach Anspruch 1, **dadurch gekennzeichnet, dass** die Einführklappe (4) eine erste Position (81) zur Übernahme des Buchblocks (1) von den Transportmitteln (2) und eine zweite Position (82) zur Übergabe des Buchblocks (1) in den Transportkanal (5) der zweiten Transporteinrichtung (18) aufweist und aus der ersten Position (81) in die zweite Position (82) sowie zurück schwenkbar angeordnet ist.

3. Vorrichtung (50) nach Anspruch 2, **dadurch gekennzeichnet, dass** die Schwenkachse (9) innerhalb der Einführklappe (4) angeordnet ist, wobei die Einführklappe (4) zur Übernahme des Buchblocks (1) von der ersten Transporteinrichtung (15) in die erste Position (81) schwenkbar ist, und wobei die Zinken (12) der Einführklappe (4) in dieser ersten Position (81) teilweise unterhalb eines stromabwärtigen Endes (2a) der Transportmittel (2) liegen.

4. Vorrichtung (50) nach einem der Ansprüche 1 bis 3, **dadurch gekennzeichnet, dass** der steuerbare Antrieb (7) als Schrittmotor oder als Linearmotor oder als Servomotor und/oder als pneumatische Vorrichtung ausgebildet ist.

5. Vorrichtung (50) nach einem der Ansprüche 1 bis 4, **dadurch gekennzeichnet, dass** der Antrieb (7) in Abhängigkeit von einer Teilung und/oder einer Geschwindigkeit der Transportfinger (6) steuerbar ausgebildet ist.

6. Vorrichtung (50) nach einem der Ansprüche 1 bis 5, **dadurch gekennzeichnet, dass** der Antrieb (7) in Abhängigkeit von einer Höhe und/oder Breite und/oder Masse des Buchblocks (1) und/oder der Reibung zwischen den einzelnen Bogen des Buchblocks (1) steuerbar ausgebildet ist.

7. Vorrichtung (50) nach einem der Ansprüche 1 bis 6, **dadurch gekennzeichnet, dass** die Einführklappe (4) und/oder eine Auflagefläche (5a) des Transportkanals (5) Luftaustrittsöffnungen (17) aufweisen, welche mit einer Druckluftquelle (90) verbunden sind.

8. Fertigungsanlage mit einer Vorrichtung nach einem der Ansprüche 1 bis 7.

9. Verfahren zur taktweisen Zuführung eines aus mindestens einem Druckbogen gebildeten liegend transportierten Buchblocks (1) zu einer Verarbeitungsstation (19), wobei der Buchblock (1) mit einer ersten Transporteinrichtung (15) an einen eine Auflagefläche (5a) aufweisenden Transportkanal (5) einer zweiten Transporteinrichtung (18) übergeben, anschliessend von einem in einem Spalt (5c) des Transportkanals (5) angeordneten Transportfinger (6) übernommen und der Verarbeitungsstation (19) zugeführt wird, wozu die erste Transporteinrichtung (15) in eine Aussparung (5e) des Transportkanals (5) eingreift, mit einer die Aussparung (5e) des Transportkanals (5) eingreifend angeordneten, kammförmig ausgebildeten Einführklappe (4) mit mehreren an einem Basisteil (10) angeordneten Zinken (12) und zwischen den Zinken (12) ausgebildeten, vom Transportkanal (5) abgewendeten Ausnehmungen (4a) sowie mehreren auf der dem Transportkanal (5) abgewendeten Seite (4c) der Einführklappe (4) angeordneten und in die Ausnehmungen (4a) eingreifenden Transportmittel (2), wobei die Einführklappe (4) aus einer ersten Position (81) zur Übernahme des Buchblocks (1) von den Transportmitteln (2) in eine zweite Position (82) zur Übergabe des Buchblocks (1) in den Transportkanal (5) der zweiten Transporteinrichtung (18) und zurück geschwenkt wird.

10. Verfahren nach Anspruch 9, **dadurch gekennzeichnet, dass** die Einführklappe (4) zur Übernahme des Buchblocks (1) von der ersten Transporteinrichtung (15) in eine erste Position (81) geschwenkt wird, wobei die Zinken (12) der Einführklappe (4) in dieser Position teilweise unterhalb eines stromabwärtigen Endes (2a) der Transportmittel (2) liegen.

11. Verfahren nach Anspruch 9 oder 10, **dadurch gekennzeichnet, dass** die Einführklappe (4) mit einem steuerbaren Antrieb (7) pneumatisch, servo-pneumatisch, über einen Servomotor, einen Schrittmotor oder einen Linearmotor geschwenkt wird.

12. Verfahren nach Anspruch 11, **dadurch gekennzeichnet, dass** der Antrieb (7) in Abhängigkeit von einer Transportfingerteilung und/oder einer Transportfingergeschwindigkeit angesteuert wird.

13. Verfahren nach einem der Ansprüche 11 oder 12, **dadurch gekennzeichnet, dass** der Antrieb in Abhängigkeit von einer Höhe und/oder Breite und/oder Masse des Buchblocks (1) und/oder der Reibung zwischen den einzelnen Bogen des Buchblocks (1) angesteuert wird.

14. Verfahren nach einem der Ansprüche 9 bis 13, **dadurch gekennzeichnet, dass** ein auf der Einführklappe (4) und/oder einer Auflagefläche (5a) des Transportkanals (5) befindlicher Buchblock (1) über Luftaustrittsöffnungen (17) der Einführklappe (4) und/oder der Auflagefläche (5a) mit Druckluft beaufschlagt wird.

## Claims

1. An apparatus (50) for the cyclic feeding of a book block (1) to a processing station (19), said book block consisting of at least one printed sheet and being transported in a horizontal position and the apparatus (50) comprising a first and a second transport device (15, 18), wherein the second transport device (18) has a transport channel (5) with a supporting surface (5a), a recess (5e) and a transport finger (6) located in a gap (5c) in the transport channel (5), and the first transport device (15) engages in the recess (5e) of the transport channel (5), wherein
• the first transport device (15) comprises a comb-like feed flap (4) with a plurality of teeth (12), provided on a base component (10), and recesses (4a) formed between said teeth (12) so as to face away from the transport channel (5), as well as a plurality of transport means (2), located on the side of the feed flap (4) away from the transport channel (5), which engage in said recesses (4a),
• the feed flap (4) is designed to engage in the recess (5e) of the transport channel (5) and is provided with a swivel pin (9) on its side (4b) facing the transport channel (5) and is also connected to a controllable drive (7).

2. An apparatus (50) according to Claim 1, **characterized in that** the feed flap (4) has a first position (81) for receiving the book block (1) from the transport means (2) and a second position (82) for delivering the book block (1) into the transport channel (5) of the second transport device (18) and is mounted so as to be capable of swivelling from the first position (81) into the second position (82) and back again.

3. An apparatus (50) according to Claim 2, **characterized in that** the swivel pin (9) is disposed inside of the feed flap (4), the feed flap (4) swivelling into the first position (81) for receiving the book block (1) from the first transport device (15) and the teeth (12) of the feed flap (4) being partly positioned underneath a downstream end (2a) of the transport means (2) in this first position (81).

4. An apparatus (50) according to one of Claims 1 to 3, **characterized in that** the controllable drive (7) takes the form of a stepping motor or linear motor or servomotor and/or pneumatic device.

5. An apparatus (50) according to one of Claims 1 to 4, **characterized in that** the drive (7) is controllable as a function of a spacing and/or speed of the transport fingers (6).

6. An apparatus (50) according to one of Claims 1 to 5, **characterized in that** the drive (7) is controllable as a function of a height and/or width and/or mass of the book block (1) and/or the friction between the separate sheets of the book block (1).

7. An apparatus (50) according to one of Claims 1 to 6, **characterized in that** the feed flap (4) and/or a supporting surface (5a) of the transport channel (5) have air outlets (17) which are connected to a compressed-air source (90).

8. A production plant including an apparatus according to one of Claims 1 to 7.

9. A method for the cyclic feeding of a book block (1) to a processing station (19), said book block (1) consisting of at least one printed sheet and being transported in a horizontal position and being delivered by a first transport device (15) to a transport channel (5) of a second transport device (18) which has a supporting surface (5a), then being received by a transport finger (6) disposed in a gap (5c) in the transport channel (5) and being supplied to the processing station (19), for which purpose the first transport device (15) engages in a recess (5e) of the transport channel (5) by means of a comb-like feed flap (4), which is designed to engage in the recess (5e) of the transport channel (5) and which comprises a plurality of teeth (12), provided on a base component (10), and recesses (4a) formed between said teeth (12) and facing away from the transport channel (5), the transport device (15) also comprising a plurality of transport means (2) which are provided on the side (4c) of the feed flap (4) away from the transport channel (5) and which engage in said recesses (4a), the feed flap (4) being swivelled from a first position (81), for receiving the book block (1) from the transport means (2), into a second position (82) for delivering the book block (1) into the transport channel (5) of the second transport device (18) and then being swivelled back again.

10. A method according to Claim 9, **characterized in that** the feed flap (4) is swivelled into a first position (81) for receiving the book block (1) from the first transport device (15), and in this position the teeth (12) of the feed flap (4) are partly positioned underneath a downstream end (2a) of the transport means (2).

11. A method according to Claim 9 or 10, **characterized in that,** by means of a controllable drive (7), the feed flap (4) is swivelled pneumatically, servo-pneumatically, via a servomotor, a stepping motor or a linear motor.

12. A method according to Claim 11, **characterized in that** the drive (7) is controlled as a function of a spacing and/or speed of the transport fingers.

13. A method according to one of Claims 11 or 12, **characterized in that** the drive is controlled as a function of a height and/or width and/or mass of the book block (1) and/or the friction between the separate sheets of the book block (1).

14. A method according to one of Claims 9 to 13, **characterized in that** compressed air is applied to a book block (1) located on the feed flap (4) and/or supporting surface (5a) of the transport channel (5) via air outlets (17) in the feed flap (4) and/or supporting surface (5a).

## Revendications

1. Dispositif (50) pour apporter de manière cadencée à un poste de traitement (19) un corps d'ouvrage (1) constitué d'au moins une feuille imprimée et transporté en position horizontale, sachant que le dispositif (50) présente un premier organe de transport (15) et un deuxième organe de transport (18), sachant que le deuxième organe de transport (18) possède un canal de transport (5) doté d'une surface porteuse (5a), d'un évidement (5e) et d'un doigt de transport (6) disposé dans une fente (5c) du canal de transport (5), et sachant que le premier organe de transport (15) s'engage dans l'évidement (5e) du canal de transport (5),
sachant que
- le premier organe de transport (15) présente un volet d'introduction (4) réalisé en forme de peigne et doté de plusieurs dents (12) disposées sur une partie de base (10) et d'évidements (4a) formés entre les dents (12) et dirigés à l'opposé du canal de transport (5), ainsi que plusieurs moyens de transport (2) s'engageant dans les évidements (4a) et disposés sur le côté du volet d'introduction (4) qui est éloigné du canal de transport (5),
- le volet d'introduction (4) est conçu pour s'engager dans l'évidement (5e) du canal de transport (5) et possède un axe de pivotement (9) disposé sur son côté (4b) tourné vers le canal de transport (5), et il est relié à un entraînement (7) pouvant être commandé.

2. Dispositif (50) selon la revendication 1, **caractérisé en ce que** le volet d'introduction (4) présente une première position (81) pour prendre en charge le corps d'ouvrage (1) des moyens de transport (2) et une deuxième position (82) pour transférer le corps d'ouvrage (1) dans le canal de transport (5) du deuxième organe de transport (18), et il est disposé à pivotement de la première position (81) dans la deuxième position (82), et en retour.

3. Dispositif (50) selon la revendication 2, **caractérisé en ce que** l'axe de pivotement (9) est disposé à l'intérieur du volet d'introduction (4), sachant que le volet d'introduction (4) peut être pivoté dans la première position (81) pour prendre en charge le corps d'ouvrage (1) du premier organe de transport (15), et sachant que, dans cette première position (81), les dents (12) du volet d'introduction (4) se situent partiellement en dessous d'une extrémité aval (2a) des moyens de transport (2).

4. Dispositif (50) selon l'une des revendications 1 à 3, **caractérisé en ce que** l'entraînement (7) pouvant être commandé est réalisé sous forme de moteur pas à pas ou de moteur linéaire ou de servomoteur, et/ou sous forme de dispositif pneumatique.

5. Dispositif (50) selon l'une des revendications 1 à 4, **caractérisé en ce que** l'entraînement (7) est conçu pour pouvoir être commandé en fonction d'un écartement et/ou d'une vitesse des doigts de transport (6).

6. Dispositif (50) selon l'une des revendications 1 à 5, **caractérisé en ce que** l'entraînement (7) est conçu pour pouvoir être commandé en fonction d'une hauteur et/ou d'une largeur et/ou d'un poids du corps d'ouvrage (1), et/ou du frottement entre les différentes feuilles du corps d'ouvrage (1).

7. Dispositif (50) selon l'une des revendications 1 à 6, **caractérisé en ce que** le volet d'introduction (4) et/ou une surface porteuse (5a) du canal de transport (5) présente des ouvertures de sortie d'air (17) qui sont reliées à une source d'air comprimé (90).

8. Installation de fabrication avec un dispositif selon l'une des revendications 1 à 7.

9. Procédé pour apporter de manière cadencée à un poste de traitement (19) un corps d'ouvrage (1) constitué d'au moins une feuille imprimée et transporté en position horizontale, sachant que le corps d'ouvrage (1) est remis par un premier organe de transport (15) à un canal de transport (5) d'un deuxième organe de transport (18) qui présente une surface porteuse (5a), puis est pris en charge par un doigt de transport (6) disposé dans une fente (5c) du canal de transport (5) et est apporté au poste de traitement (19), sachant qu'à cet effet le premier organe de transport (15) s'engage dans un évidement (5e) du canal de transport (5),
avec un volet d'introduction (4) disposé en engagement dans l'évidement (5e) du canal de transport (5) et réalisé en forme de peigne, doté de plusieurs dents (12) disposées sur une partie de base (10) et d'évidements (4a) formés entre les dents (12) et dirigés à l'opposé du canal de transport (5), et avec plusieurs moyens de transport (2) s'engageant dans les évidements (4a) et disposés sur le côté (4c) du volet d'introduction (4) qui est éloigné du canal de transport (5), sachant que le volet d'introduction (4) est pivoté d'une première position (81) pour prendre en charge le corps d'ouvrage (1) des moyens de transport (2) dans une deuxième position (82) pour transférer le corps d'ouvrage (1) dans le canal de transport (5) du deuxième organe de transport (18), et en retour.

10. Procédé selon la revendication 9, **caractérisé en ce que** le volet d'introduction (4) est pivoté dans une première position (81) pour prendre en charge le corps d'ouvrage (1) du premier organe de transport (15), sachant que, dans cette position, les dents (12) du volet d'introduction (4) se situent partiellement en dessous d'une extrémité aval (2a) des moyens de transport (2).

11. Procédé selon la revendication 9 ou 10, **caractérisé en ce que** le volet d'introduction (4) est pivoté par un entraînement asservissable (7) de façon pneumatique, servo-pneumatique, au moyen d'un servomoteur, d'un moteur pas à pas ou d'un moteur linéaire.

12. Procédé selon la revendication 11, **caractérisé en ce que** l'entraînement (7) est asservi en fonction d'un écartement des doigts de transport et/ou d'une vitesse des doigts de transport.

13. Procédé selon l'une des revendications 11 ou 12, **caractérisé en ce que** l'entraînement est asservi en fonction d'une hauteur et/ou d'une largeur et/ou d'un poids du corps d'ouvrage (1), et/ou du frottement entre les différentes feuilles du corps d'ouvrage (1).

14. Procédé selon l'une des revendications 9 à 13, **caractérisé en ce qu'**un corps d'ouvrage (1) se trouvant sur le volet d'introduction (4) et/ou sur une surface porteuse (5a) du canal de transport (5) est sollicité par de l'air comprimé via des ouvertures de sortie d'air (17) du volet d'introduction (4) et/ou de la surface porteuse (5a).
